# EUROPEAN PATENT APPLICATION

(11) **EP 3 951 701 A1**
(43) Date of publication of application: **09.02.2022**
(21) Application number: 20198379.8
(22) Date of filing: 25.09.2020
(51) Int. Cl.: G06T 5/00, G06T 5/50, G06T 7/30

(54) **SHARPNESS PRESERVING RESPIRATORY MOTION COMPENSATION**

(30) Priority: 06.08.2020 US 202063061854 P
(71) Applicant: Koninklijke Philips N.V., 5656 AG Eindhoven (NL)
(72) Inventor: KABUS, Sven, 5656 AE Eindhoven (NL); BIPPUS, Rolf Dieter, 5656 AE Eindhoven (NL); CAROLUS, Heike, 5656 AE Eindhoven (NL); HEIJTEL, Dennis, 5656 AE Eindhoven (NL); KRUIS, Matthijs, 5656 AE Eindhoven (NL); PERKINS, Amy, 5656 AE Eindhoven (NL); RENISCH, Steffen, 5656 AE Eindhoven (NL); SALOMON, Andre Frank, 5656 AE Eindhoven (NL)
(74) Representative: Philips Intellectual Property & Standards

(57) **Abstract**

A method and system are provided for reconstructing a motion-compensated nuclear image of a subject, as well as an arrangement for the acquiring a nuclear image, and a computer program for carrying out the method. The reconstruction method comprises receiving nuclear image data for multiple motion states, reconstructing the data into an image for each motion state, and calculating a deformation vector field for each state for mapping the image onto a reference motion state. Calculating the deformation vector field comprises providing an initial vector field, defining at least one rigid region of the subject, incorporating that rigid region into the initial vector field, and calculating the deformation vector field with the incorporated rigid region. The method further comprises mapping the reconstructed image of each motion state onto the reference state using the deformation vector fields; and combining the mapped images into a motion-compensated nuclear image.

## Description

### FIELD OF THE INVENTION

The invention generally relates to motion-compensated nuclear imaging. In particular, but not exclusively, the invention relates to reconstructing a motion-compensated nuclear image.

### BACKGROUND OF THE INVENTION

In nuclear imaging, emission tomography imaging such as positron emission tomography (PET) imaging and single photon emission tomography (SPECT) imaging, is particularly performed to visualize and quantitatively assess the metabolic state of a patient. For instance, a PET or SPECT image can help to localize pathologic processes, such as tumor-growth or inflammation, and areas of abnormal blood perfusion in organs. Emission tomography imaging is therefore also referred to as functional imaging. In contrast, application imaging techniques that visualize the subject's anatomy, such as MR, CT or ultrasound imaging, are often referred to as structural imaging.

In PET, a positron-emitting substance is administered to the patient. The substance, which is usually also referred to as radio pharmaceutical or radiotracer, is selected such that it is adsorbed by cells which are involved in the pathological processes to be examined. When a positron is emitted by the radiotracer, an encounter with a nearby electron annihilates the electron positron pair and produces a pair of annihilation photons. Each of these annihilation photons has an energy of 511 keV and both photons travel in substantially opposite directions. These photons are recorded by the PET detector substantially at the same time as a so-called coincidence. From such coincidences, PET systems reconstruct an activity distribution or activity map, which shows the spatial distribution of the electron positron annihilation rate within the patient and which is also referred to as PET image herein. The activity distribution or PET image substantially corresponds to the spatial distribution of the radiotracer within the subject, which can thus be evaluated for diagnostic purposes.

In SPECT imaging a radiotracer is used that emits gamma photons. The radiotracer can be chosen based on the particular anatomical function that needs to be visualized in the image. The energy of the detected gamma rays will depend on the substance used, and typically lies in the range of 40 keV - 140 keV. Also for SPECT, the activity distribution visualized in the SPECT image substantially corresponds to the spatial distribution of the radiotracer within the subject, which can thus be evaluated for diagnostic purposes.

Nuclear imaging typically requires scan times of multiple minutes per bed position of the patient in order to attain a sufficiently high signal-to-noise ratio (SNR). These scan times are already too long for subjects to hold their breath, especially for patients with lung conditions that impair breathing. Because scans in PET and SPECT usually need to be performed at multiple bed positions, total scan times can increase up to typically 10-20 minutes, only increasing the problem. Patients are therefore allowed to breathe freely during imaging. Optionally breathing can be supported by a feedback mechanism.

However, respiratory motion during the acquisition of emission tomography (ET) images can cause significant blurring and errors in an image-based assessment of metabolic parameters and the precise localization of pathological processes. Therefore, the images need to be compensated for respiratory motion compensation. This motion compensation is usually performed on the basis of gated ET imaging. Here, the acquired ET data are separated into two or more motion states, usually referred to as gates or bins, where each gate contains the ET data acquired during one phase of the respiratory motion. In order to further evaluate the ET images, a particular motion phase may be defined or selected as a reference gate and the other ET images may be mapped onto this ET image by means of image registration in order to align them with this reference gate.

Current motion compensation techniques focus on the alignment of organs such as lungs, liver, and kidneys that follow the diaphragm motion and move predominantly in cranio-caudal direction. After alignment, SNR is typically increased and visibility of organs or lesions is improved or even enabled. However, for current registration approaches motion-compensating the organs also results in blurring of adjacent rigid, previously aligned regions in the anatomy. Blurring of these image structures reduces image quality.

### SUMMARY OF THE INVENTION

The current invention seeks to provide an approach for reconstructing nuclear images wherein the motion or organs, such as lungs and liver, and other soft tissue is compensated for while the sharpness of rigid regions such as the spine is preserved.

It is an insight of the invention that currently known approaches motion-compensating the organs also results in blurring of the spine region, because an underlying, uniform elasticity and possible motion in three directions is assumed for the entire image volume. Contrarily, human and animal physiology have rigid regions such as the spine, rib cage and pelvis. The pleura and peritoneum allow for a sliding surface motion of lungs and abdominal organs against these bone structures. The invention therefore further seeks to provide an approach for compensating for motion in reconstruction of nuclear images that better reflects the anatomical characteristics of the subject.

Thereto a method and a system for reconstructing a motion-compensated nuclear image of a subject are provided, as well as an arrangement for acquiring a nuclear image of a subject, and a computer program for carrying out the method.

The method for reconstructing a motion-compensated nuclear image of a subject comprises: receiving nuclear image data for multiple motion states of the subject, reconstructing the nuclear image data into a nuclear image for each motion state, and calculating a deformation vector field for each motion state for mapping the reconstructed nuclear image of that motion state onto a reference motion state. Herein calculating the deformation vector field comprises the steps of: providing an initial deformation vector field for each motion state, defining at least one rigid region of the subject, incorporating defined rigid region into the initial deformation vector field; and calculating the deformation vector field with the incorporated rigid region. Examples of these rigid regions are the spine and at least part of the ribcage. A further example of a rigid region is the pelvis. The method further comprises: mapping the reconstructed nuclear image of each motion state onto the reference motion state using the deformation vector fields; and combining the mapped nuclear images of the multiple motion states into a motion-compensated nuclear image. The method is preferably computer-implemented or implemented by other suitable calculation means.

Preferably, the method further comprises receiving structural image data of the subject and the at least one rigid region is defined using the structural image data. In a particular embodiment the structural image data is segmented to define the rigid region. In this embodiment, rigid regions are defined as regions of interest, preferably by segmenting the structural image data into binary mask or a region of interest contour.

According to one aspect of the method, the defined rigid region is incorporated by inserting it directly into the deformation vector field.

According to another aspect of the method, the defined rigid region is incorporated into the deformation vector field indirectly by inserting it into the elasticity matrix.

In an embodiment, the method further comprises adjusting a transition region between the boundary of the rigid region and an adjacent region. Preferably adjusting the boundary region comprises one or more of: applying a smoothing filter to the transition region of the deformation vector field; or assigning an elasticity to the transition region of the elasticity matrix that is higher than the elasticity of the adjacent region.

According to an alternative aspect of the method, the rigid region is incorporated by constraining the step of calculating the deformation vector field such that the voxels directly adjacent to the boundary of the rigid region with an adjacent region are only allowed to be displaced parallel to the boundary.

In another alternative aspect of the method, defining the at least one rigid region comprises analyzing the deformation vector field and the defined rigid region is incorporated into the analyzed vector field. In this aspect preferably the steps of defining the at least one rigid region, incorporating the defined rigid region into the analyzed vector field and calculating the deformation vector field are performed iteratively until a stopping criterion has been reached.

The system for reconstructing a motion-compensated nuclear image of a subject comprises a nuclear image reconstruction unit comprising an input for receiving nuclear image data for multiple motion states of the subject. The reconstruction unit is configured to reconstruct the nuclear image data into a nuclear image for each motion state. The system further comprises a deformation vecotor field calculator configured to calculate a deformation vector field for each motion state for mapping the reconstructed nuclear image of that motion state onto a reference motion state. The deformation vector field calculator comprises a rigid region detector, which comprises an input for receiving structural image data. The rigid region detector is configured to define one or more rigid regions of the subject using the structural image data. The deformation vector field calculator further comprises a deformation vector field processor, which is configured to provide an initial deformation vector field for each motion state, to incorporate the defined rigid region into the initial deformation vector fields, and to calculate updated deformation vector fields with the incorporated rigid region. The system further comprises a nuclear image assembly unit, which is configured to map the reconstructed nuclear image of each motion state onto the reference motion state using the updated deformation vector fields. The nuclear image assembly unit is further configured to combine the mapped nuclear images of the multiple motion states into a motion-compensated nuclear image. Preferably, the system also comprises a display for displaying the motion-compensated nuclear image.

The arrangement for acquiring a nuclear image of a subject comprises a nuclear imaging device for acquiring nuclear image data of the subject and the above described system for reconstructing the nuclear image of the subject. In an advantageous embodiment, the arrangement further comprises a structural imaging device for acquiring structural image data of the subject.

The computer program product comprises instructions that cause a processor to carry out the above described method, when the computer program is executed.

Another advantage lies in that blurring of rigid regions in the nuclear image of the subject is at least reduced and in the best case is removed entirely. By identifying rigid regions and including these into the deformation vector field calculation, the resulting deformation vector field does not artificially move the regions when mapping the different motions states onto the reference state. This improves the sharpness of these regions in the resulting final image

A further advantage is that overall image quality of the nuclear image is improved. The increased signal-to-noise ratio that is achieved from compensating for the motion of motion or organs, such as lungs and liver, and other soft tissue is retained while at the same time the sharpness of rigid regions such as the spine is preserved. The resulting image has an improved signal-to-noise ratio as well as reduced blurring.

### BRIEF DESCRIPTION OF THE FIGURES

In the following drawings:
Figure 1 schematically and exemplarity illustrates an arrangement for acquiring a nuclear image of a subject comprising a system for reconstructing a motion-compensated nuclear image of the subject.
Figure 2 schematically illustrates an example of a method for reconstructing a motion-compensated nuclear image of a subject.
Figure 3 schematically illustrates another example of a method for reconstructing a nuclear image of a subject.
Figures 4a and 4b schematically illustrate examples of incorporating rigid regions in an initial deformation vector field.
Figure 5 schematically illustrates an example of a method for reconstructing a nuclear image.

### DETAILED DESCRIPTION OF THE INVENTION

In the examples below, the nuclear imaging or functional imaging is described with reference to an exemplary application of PET imaging. It is however to be understood that the functional imaging technique is not restricted to this example and alternative emission tomography imaging techniques such as SPECT imaging could also be used. Further, in the examples below, the structural imaging that is performed to obtain information on the anatomy of the subject, is described with reference to an exemplary application of CT imaging. It is however also to be understood that the structural imaging technique is not restricted to this example and alternatives such as MR imaging or ultrasound imaging could also be used.

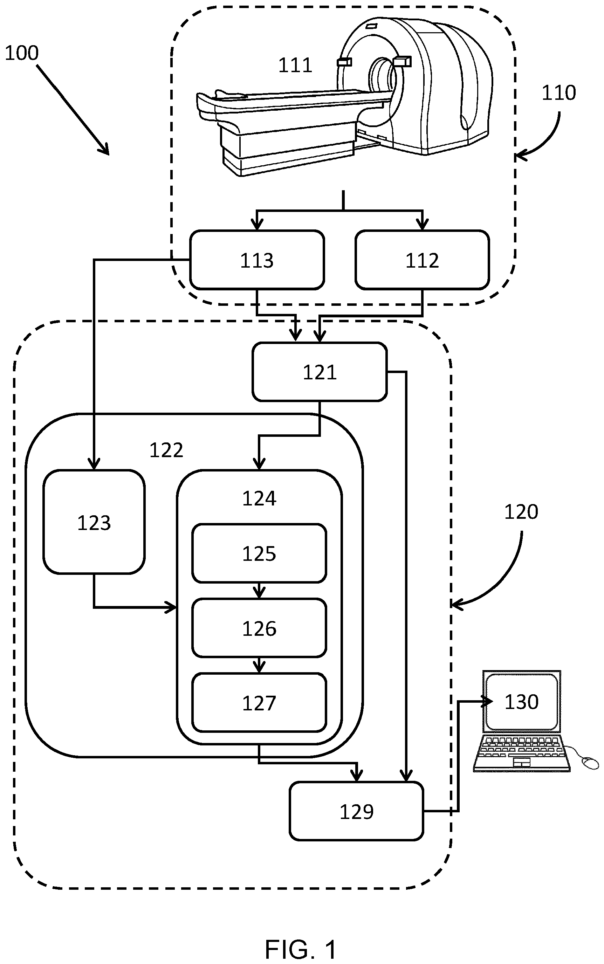

Figure 1 illustrates a system 120 for reconstructing a motion-compensated nuclear image of a subject. In this example, the system 120 is illustrated as a part of an arrangement for acquiring a nuclear image of a subject 100.

The arrangement 100 has an imaging apparatus 110 that acquires image data of a subject. In Figure 1 a combined PET/CT scanning device 111 is illustrated. Nuclear image data 112 is collected by the PET section of this device and structural image data 113 is collected by the CT section of the device. In this example separate structural imaging data is acquired. Alternatively, the structural data may also be derived from the nuclear image data. The nuclear image data 112 and structural image data 113 are received and reconstructed by system 120 to provide a motion-compensated nuclear image of the subject. Preferably, the arrangement 100 for nuclear image acquisition also has a display 130. This can be the display of a computer that can be part of the arrangement or a separate display. The advantage of having such a display is that the acquired and reconstructed image is available to the operator or clinician for viewing. Additionally or alternatively that reconstructed image can also be stored in a database or archiving system for later access and viewing.

The system 120 for reconstructing a motion-compensated nuclear image of a subject comprises a nuclear image reconstruction unit 121, a deformation vector field (DVF) calculator 122, and a nuclear image assembly unit 129.

The nuclear image reconstruction unit 121 in this example is a unit for PET image reconstruction. The unit has an input for receiving nuclear image data 112 in the form of PET data for multiple motion states of the subject. The PET data may be in any for that is suitable for use by the reconstruction unit 121, for example list-mode data or sinogram data. The nuclear image data is sorted, or binned, into multiple motion states of the subject. The states can be defined based on the breathing cycle of the patient. When the heart is an organ of interest, the states can alternatively be fined based on the cardiac motion cycle of the patient. The number of states can be two, for example maximum inhale or exhale by the subject, but is preferably more.

The reconstruction unit 121 is configured to reconstruct the nuclear image data 112 into a nuclear image for each motion state. For this purpose the unit may comprise a dedicated reconstruction algorithm. Quality of the reconstructed image can be improved by additionally using the structural image data 113 for calculating attenuation and scatter correction as a part of the image reconstruction for each motion state.

The DVF calculator 122 is configured to calculate a DVF for each motion state for mapping the reconstructed nuclear image of that motion state onto a the reference motion state. One of the motion states in the nuclear image data can be selected as a reference motion state. Alternatively, when structural data 113 is separately acquired, the reference motion state preferably corresponds to the motion state in which the structural image data 113 is acquired. In practical situations, the structural image data can usually be acquired quickly in a single motion state. This applies in particular to CT image acquisition. A further option is to separately define a reference state that does not correspond to the motion states of the image data acquisition. For example, a reference state can be defined such that the images are all deformed towards the center of the motion pattern and can be said to meet each other in the middle.

For this purpose of calculating each DVF, the DVF calculator 122 comprises a rigid region detector 123 and a DVF processor 124.

Rigid region detector 123 comprises an input for receiving structural image data and is configured to define one or more rigid regions of the subject using the structural image data. Rigid regions can, for example be detected by using a segmentation device. Such a device can identify the rigid anatomical regions automatically or semi-automatically and/or can have a user-interface to allow an operator to delineate the regions manually. The output of such a segmentation device can be a binary mask of the rigid region or a region of interest contour.

DVF processor 124 is configured to provide an initial DVF 125 for each motion state, to incorporate the defined rigid region 126 into each of the initial DVFs, and to calculate updated DVFs 127 with the incorporated rigid region. The reconstructed nuclear image of each motion stated and its corresponding DVF to map it to the reference state are the input for the nuclear image assembly unit 129.

Nuclear image assembly unit 129 is configured to map the reconstructed nuclear image of each motion state onto the reference motion state by using the updated deformation vector fields. The assembly unit 129 is further configured to combine the mapped nuclear images of the multiple motion states into a motion-compensated nuclear image. This combining can, for example, be done by adding the individual mapped images to create a sum image as the motion-compensated nuclear image. Alternatively, the images can be combined by calculating the mean of the mapped images to create an average image as the motion-compensated nuclear image.

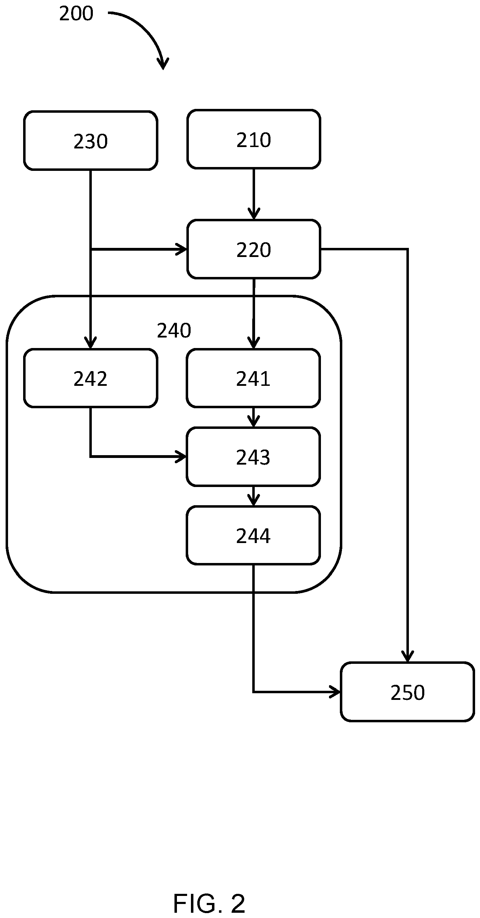

Figure 2 schematically illustrates steps of a method 200 for reconstructing a motion-compensated nuclear image of a subject.

The method for reconstructing the image starts with receiving nuclear image data 210 of the subject. The image data is for multiple motion states of the subject, meaning it is grouped into groups, also commonly referred to as "gates" or "bins". The data of each group was acquired when the subject was in the corresponding motion state. Such data is also referred to as gated nuclear image data. Next, the nuclear image data is reconstructed into a nuclear image for each motion state 220. In the example of Figure 2, the method comprises an additional optional separate step of receiving structural image data 230. The structural data is used to determine an attenuation map used for attenuation and scatter correction during nuclear image reconstruction 220.

Next, DVFs are calculated for each motion state 240. The DVFs are used to map the reconstructed nuclear image of the respective motion state onto a reference motion state. As explained above in relation to the system, the reference state can for example be a state selected from the gated nuclear image data, a separately defined state, or the motion state at which the structural image data was acquired.

Calculating the DVF for each motion state 240 further involves the steps of providing an initial deformation vector field 241 for each motion state and defining at least one rigid region in the subject 242. The defined rigid region is then incorporated into the initial deformation vector field 243 and the deformation vector field is calculated with the incorporated rigid region 244.

The final reconstructed nuclear image is then assembled 250 by mapping the reconstructed nuclear image of each motion state onto the reference motion state using the deformation vector fields and then combining the mapped nuclear images of the multiple motion states into a motion-compensated nuclear image.

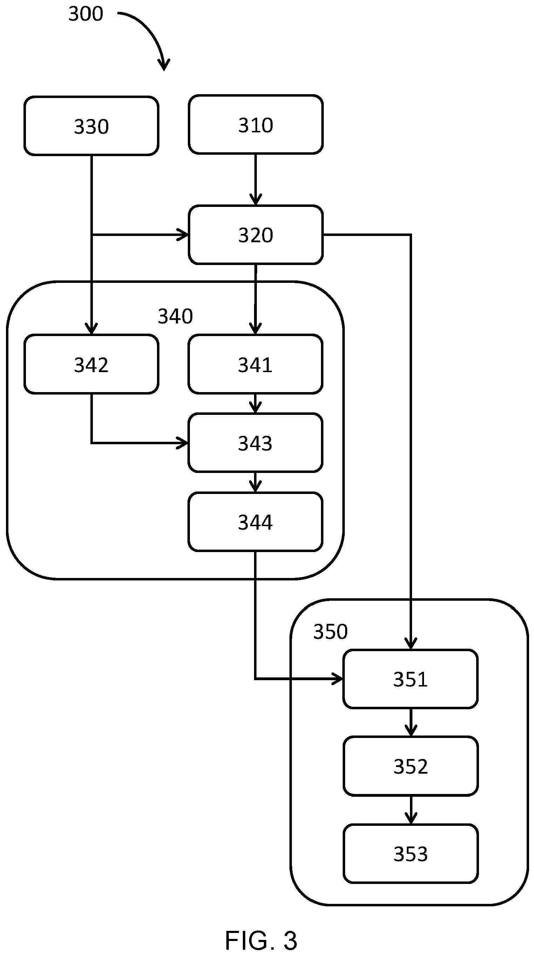

Figure 3 schematically illustrates another example of a method 300 for reconstructing a nuclear image of a subject. Analogous to embodiment of Figure 2, the method comprises receiving nuclear image data for multiple motion states 310, reconstructing the nuclear image data into a nuclear image for each motion state 320. In this example the nuclear image data is PET data and a PET image is reconstructed for each motion state. In this example additional structural image data is received 330 in the form of CT data. The CT data is used in the PET image reconstruction to calculate an attenuation map to correct for scatter and attenuation. A deformation vector field for each motion state 340 for mapping the reconstruction image of that state onto a reference state.

In this example the motion state of the CT image is used as the reference motion state. Rigid regions are detected by segmenting the CT image data 342. The result of the segmentation is a binary mask indicating the location of one or more rigid regions. Such a binary mask can be the direct output of a segmentation algorithm. Alternatively, the output of the segmentation algorithm can be a region-of-interest contour of the one or more rigid regions. In that case, detecting the rigid regions involves an additional step of transforming the contour into a binary mask. The binary mask indicating the location of the rigid region is provided as input to define the rigid region in the DVF.

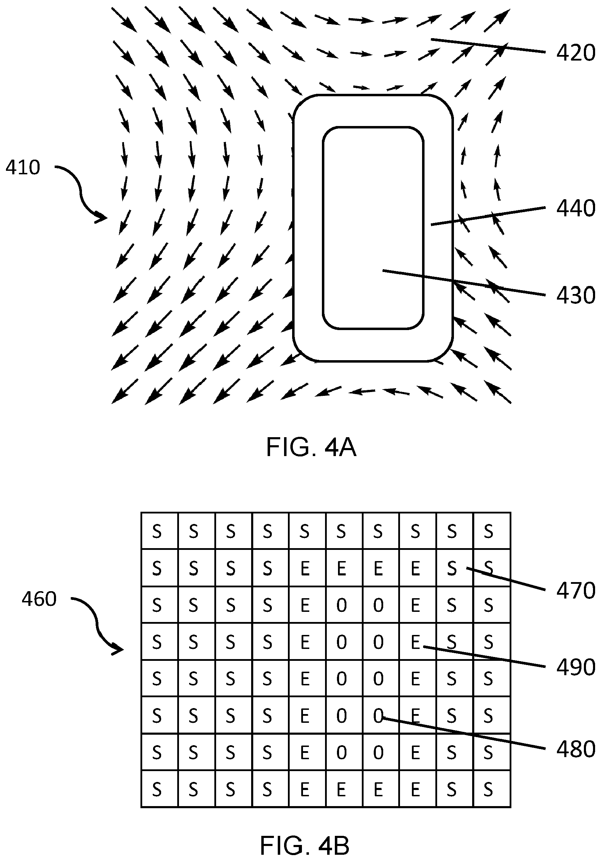

In calculating the DVFs for each motion state, an initial DVF is provided. In the approach illustrated here, providing the initial DVF is done by calculating the DVF for each motion state in a known manner 341 where all tissue is considered to be soft tissue having the same elasticity and without taking any rigid regions into account. To define the one or more rigid regions, the binary mask indicating the location of the rigid region is inserted into the initial DVF directly 343 and a region between the boundary of the rigid region and an adjacent region is defined and adjusted to calculate the DVF 344. This will be further explained with reference to Figure 4a.

When the DVF for each motion state has been calculated, the motion-compensated nuclear image is assembled 350. The calculated DVFs are used to map the reconstructed PET image of each motion state 320 onto the motion state of the CT image data 351. The mapped PET images of the multiple motion states are then combined into a motion-compensated PET image by calculating the sum of the mapped images 352. In this example the summed image is then further normalized into clinical standard uptake value units 353 to form the final motion-compensated PET image.

Figures 4a and 4b schematically illustrate examples of incorporating rigid regions in an initial deformation vector field. Figure 4a shows an example where the rigid region is incorporated by inserting it directly into the vector field and Figure 4b shows an example where the rigid region is incorporated indirectly by inserting it into the elasticity matrix.

Figure 4a shows a two-dimensional representation of a DVF 410 with an inserted rigid region 430. In use, such a DVF can also be three-dimensional. Dimensions will correspond to the image that is being reconstructed. The initial DVF calculated in this example is a full vector field with vectors indicating a displacement for each voxel to map it to the reference motion state. In this example the rigid region is detected and defined in the form of a binary mask. The binary mask can be two- or three-dimensional, corresponding to the dimensions of the DVF. The binary mask is inserted into the DVF by setting the vector of the voxels of the rigid region 430 to zero. Further, a transition region 440 between the boundary of the rigid region and the adjacent soft tissue region is defined and also adjusted. This region can be one or more voxels in thickness. In this example, the transition region is adjusted by applying a smoothing filter to the vectors of the transition region. Applying such a filter has the advantage the vectors are adjusted in such a manner that no tissue gaps will open between the rigid region and the soft tissue after mapping, and mapping of soft tissue onto the rigid region is prevented. The remaining soft tissue displacement vectors 420 are retained as originally calculated.

Figure 4b shows a two-dimensional grid representation of the voxels of an elasticity matrix 460 with an inserted rigid region in accordance with the invention. The elasticity matrix is a commonly used part of deformation vector field calculations. This matrix specifies the value expressing the elasticity of the tissue for each voxel position in the image. In known methods, elasticity of all voxels is homogeneously set to a standard soft tissue value. In use, the elasticity matrix can also be three-dimensional. Dimensions of the elasticity matrix will correspond to the dimension of calculated DVFs. The initially calculated DVFs in the invention can be a zero-vector field corresponding to making an identical copy, or initially calculated DVFs using an elasticity matrix assuming all voxels correspond to soft tissue having the same standard soft tissue elasticity value S. In this example of the invention as illustrated in Figure 4b, the rigid region is detected and defined in the form of a binary mask. The binary mask can be two- or three-dimensional, corresponding to the dimensions of the elasticity matrix. The binary mask is inserted into the elasticity matrix by setting the elasticity of the voxels of the rigid region to zero 480. The elasticity of the other, soft-tissue voxels is left as S 470.

In the example of Figure 4b. a transition region between the boundary of the rigid region and the adjacent region is also adjusted. The transition region shown in this figure comprises a single layer of transition voxels 490, but this could also be two or more layers. The region is adjusted by assigning an elasticity value E to these voxels 490 that is higher than the standard soft tissue elasticity S. Using such a higher elasticity has the advantage that the motion allowed by the voxels more closely resembles an anatomical sliding surface.

In a further alternative approach, the defined rigid region can be incorporated into the final DVF by constraining the step of calculating the deformation vector field such that the voxels directly adjacent to the boundary of the rigid region with an adjacent region are only allowed to be displaced parallel to the boundary. This can, for example, be done by only allowing these voxels to be displaced such that the displacement vector component in normal direction to the boundary is continuous across the boundary. In this approach, the rigid region is for example supplied to the DVF calculation algorithm as an additional input in the form of a binary mask. Voxels corresponding to the rigid region are fixed in place. Voxels on the boundary between soft tissue and the rigid region are uncoupled from the rigid region and additionally allowed only to move in a direction parallel to the boundary surface. The other voxels corresponding to the further soft tissue are allowed to displace as usual. In this way, the anatomical sliding surface between rigid regions and adjacent soft tissue is modelled more accurately.

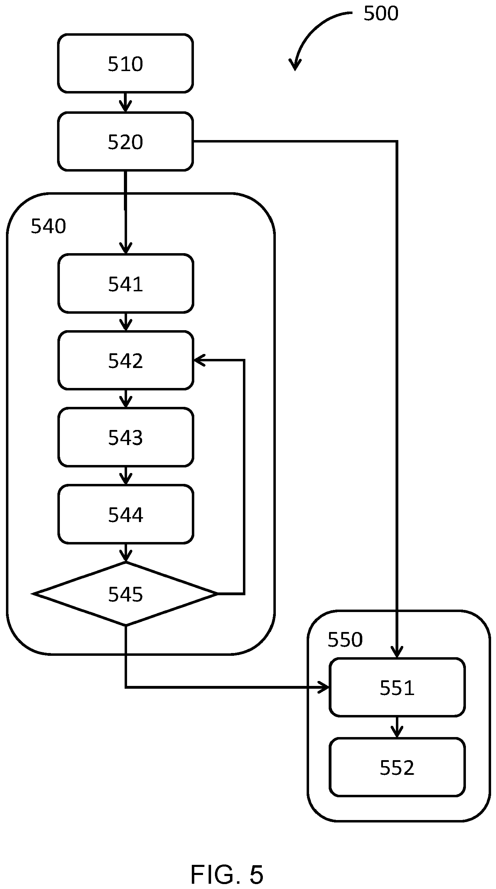

Figure 5 schematically illustrates another example of a method 500 for reconstructing a nuclear image. In this example, the motion-compensated nuclear image of the subject is reconstructed using only nuclear image data and the deformation vector fields for each motion state is calculated in an iterative manner. Analogous to the previous examples, the method steps comprise receiving nuclear image data such as PET or SPECT data for multiple motion states 510, reconstructing the nuclear image data into a nuclear image for each motion state 520, and calculating a deformation vector field for each motion state 540 for mapping the reconstruction image of that state onto a reference state.

In this example, the reference motion state is a separately pre-defined motion state. This has the advantage of allowing for a fully automated reconstruction method with an approach that is consistent and independent of characteristics that are particular to the subject.

Calculation of the DVF is initiated by providing an initial DVF 541. This can be a zero-field representing no deformation as a starting point, or a reference DVF that is retrieved from a database. Next, the rigid region is detected by analyzing the properties of the DVF 542. This is preferably done by using vector operators. For example, a shear or strain map of the DVF can be generated. A local region of high shear is an indicator for a transition between regions with different types of tissue. The shear values of the DVF thereby provide an estimate of possible locations that corresponds to a rigid region. There may be one rigid region in the nuclear image, such as the spine adjacent to the lungs, but there can also be additional regions that are part of the image, such as part of the ribcage and/or the pelvis.

This approach further has a checking step for determining if a region is indeed rigid. For example, a standard model of the behavior of the lungs could be used as a reference, or an organ atlas. If earlier structural images are available of the subject these could also be used.

The detected rigid region is then incorporated into the analyzed DVF by adjusting the elasticity matrix 543. This is done by allowing spatial variation in the elasticity matrix, in particular by increasing the elasticity where high local shear motion is detected. Local increased elasticity in turn allows for the shear component to further increase. This has the advantage that the DVF motion increasingly approximates a sliding surface in accordance with subject anatomy. An updated DVF is then calculated using the adjusted elasticity matrix 544.

The steps of analyzing the current DVF 542, adjusting the elasticity matrix 543, and calculating an updated DVF 544 are repeated until a stopping criterion has been met 545. Various stopping criteria can be contemplated in this context. For example, iterations can be stopped when the estimated location of the rigid region no longer changes. Or, for example, when the amount of changes in the updated DVF as compared to the previous DVF fall below a pre-determined threshold. As an alternative example, iterations can also be stopped when local high shear values in the DVF reach a predetermined maximum. An additional or alternative option is to pre-define a maximum number of iterations.

When the DVF for each motion state has been calculated, the motion-compensated image is assembled 550. The calculated DVFs are used to map the reconstructed nuclear image of each motion state onto the pre-defined reference state 551. The mapped nuclear images of the multiple motion states are then combined into the motion-compensated nuclear image by calculating the mean of the mapped images 552.

Any of the method steps disclosed herein, may be recorded in the form of a computer program comprising instructions which when executed on a processor cause the processor to carry out such method steps. The instructions may be stored on a computer program product. The computer program product may be provided by dedicated hardware as well as hardware capable of executing software in association with appropriate software. When provided by a processor, the functions can be provided by a single dedicated processor, by a single shared processor, or by a plurality of individual processors, some of which can be shared. Furthermore, embodiments of the present invention can take the form of a computer program product accessible from a computer-usable or computer-readable storage medium providing program code for use by or in connection with a computer or any instruction execution system. For the purposes of this description, a computer-usable or computer readable storage medium can be any apparatus that may include, store, communicate, propagate, or transport the program for use by or in connection with the instruction execution system, apparatus, or device. The medium can be an electronic, magnetic, optical, electromagnetic, infrared, or semiconductor system, or apparatus or device, or a propagation medium. Examples of a computer-readable medium include a semiconductor or solid state memory, magnetic tape, a removable computer diskette, a random access memory "RAM", a read-only memory "ROM", a rigid magnetic disk and an optical disk. Current examples of optical disks include compact disk - read only memory "CD-ROM", compact disk - read/write "CD-R/W", Blu-Ray^{™} and DVD. Examples of a propagation medium are the Internet or other wired or wireless telecommunication systems.

Variations to the disclosed embodiments can be understood and effected by those skilled in the art in practicing the claimed invention, from a study of the drawings, the disclosure, and the appended claims. It is noted that the various embodiments may be combined to achieve further advantageous effects.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for reconstructing a motion-compensated nuclear image of a subject (200, 300, 500), the method comprising:
- receiving nuclear image data for multiple motion states of the subject (210, 310, 510);
- reconstructing the nuclear image data into a nuclear image for each motion state (220, 320, 520);
- calculating a deformation vector field for each motion state (240, 340, 540) for mapping the reconstructed nuclear image of that motion state onto a reference motion state, wherein calculating the deformation vector field comprises the steps of:
- providing an initial deformation vector field (241, 341, 541) for each motion state,
- defining at least one rigid region (242, 342, 542) of the subject;
- incorporating defined rigid region into the initial deformation vector field (243, 343, 543); and
- calculating the deformation vector field with the incorporated rigid region (244, 344, 544);
the method further comprising
- mapping the reconstructed nuclear image of each motion state onto the reference motion state using the deformation vector fields (352, 551); and
- combining the mapped nuclear images of the multiple motion states (352, 552) into a motion-compensated nuclear image.

2. The method according to claim 1, wherein the method further comprises receiving structural image data of the subject (230, 330) and the at least rigid region is defined using the structural image data.

3. The method according to claim 2, further comprising segmenting the structural image data to define the rigid region as a region of interest (342), preferably by segmenting the structural image data into binary mask or a region of interest contour.

4. The method according to any of claims 1-3, wherein the defined rigid region is incorporated (343) by inserting it directly into the deformation vector field (410).

5. The method according to any of claims 1-3, wherein the defined rigid region is incorporated into the deformation vector field indirectly by inserting it into the elasticity matrix (460).

6. The method according to any of claims 1-5, further comprising adjusting a transition region (440, 490) between the boundary of the rigid region and an adjacent region.

7. The method according to claim 6, wherein adjusting the boundary region comprises one or more of: applying a smoothing filter to the transition region of the deformation vector field; assigning an elasticity to the transition region of the elasticity matrix that is higher than the elasticity of the adjacent region.

8. The method according to any of claim 1-3, wherein the defined rigid region is incorporated by constraining the step of calculating the deformation vector field such that the voxels directly adjacent to the boundary of the rigid region with an adjacent region are only allowed to be displaced parallel to the boundary.

9. The method according to claim 1, wherein defining the at least one rigid region comprises analyzing the deformation vector field (542) and the defined rigid region is incorporated into the analyzed vector field by adjusting the elasticity matrix (543).

10. The method according to claim 9, wherein the steps of defining the at least one rigid region (542), incorporating the defined rigid region into the analyzed vector field by adjusting the elasticity matrix (543) and calculating an updated deformation vector field (544) are performed iteratively until a stopping criterion has been met (545).

11. A system for reconstructing a motion-compensated nuclear image of a subject (120), wherein the system comprises:
- a nuclear image reconstruction unit (121) comprising an input for receiving nuclear image data for multiple motion states of the subject, and the reconstruction unit being configured to reconstruct the nuclear image data into a nuclear image for each motion state;
- a deformation vector field calculator (122) configured to calculate a deformation vector field for each motion state for mapping the reconstructed nuclear image of that motion state onto a reference motion state, the deformation vector field calculator comprising:
- a rigid region detector (123), comprising an input for receiving structural image data, the rigid region detector being configured to define one or more rigid regions of the subject using the structural image data;
- a deformation vector field processor (124) configured to provide an initial deformation vector field for each motion state (125), to incorporate the defined rigid region into the initial deformation vector fields (126), and to calculate updated deformation vector fields with the incorporated rigid region (127);
the system further comprising
- a nuclear image assembly unit (129) configured to map the reconstructed nuclear image of each motion state onto the reference motion state using the updated deformation vector fields, and being further configured to combine the mapped nuclear images of the multiple motion states into a motion-compensated nuclear image.

12. The system according to claim 11, further comprising a display (130) for displaying the motion-compensated nuclear image.

13. Arrangement for acquiring a nuclear image of a subject (100) comprising:
- a nuclear imaging device (111) for acquiring nuclear image data (112) of the subj ect
- the system (120) of any of claims 11-12 for reconstructing the nuclear image of the subject.

14. The arrangement of claim 13, further comprising a structural imaging device (111) for acquiring structural image data (113) of the subject.

15. A computer program product comprising instructions for causing a processor to carry out the method according to any of claims 1-10, when the computer program is executed.
